# EUROPEAN PATENT APPLICATION

(11) **EP 3 789 192 A1**
(43) Date of publication of application: **10.03.2021**
(21) Application number: 19382780.5
(22) Date of filing: 09.09.2019
(51) Int. Cl.: B32B 1/08, B32B 5/18, B32B 5/20, B32B 5/24, B32B 25/04, B32B 25/10, B32B 25/12, B32B 25/14, B32B 25/16, B32B 25/20, C08J 9/08, C08J 9/10, B29C 44/34, B29C 44/44

(54) **VULCANIZED TUBE AND METHOD FOR MANUFACTURING A VULCANIZED TUBE**

(71) Applicant: Cikautxo, S. Coop., 48710 Berriatua (Vizcaya) (ES)
(72) Inventor: GURMENDI LOSTAO, Urko, 20015 DONOSTIA (ES); MARTINEZ ALONSO, Pablo, 20009 DONOSTIA (ES); RODRIGUEZ PEREZ, Miguel Angel, 47008 VALLADOLID (ES); OLIVEIRA SALMAZO, Leandra, 47012 VALLADOLID (ES); LOPEZ GIL, Alberto, 47012 VALLADOLID (ES)
(74) Representative: Igartua, Ismael

(57) **Abstract**

Vulcanized tube comprising at least one foamed layer (1') of elastomer material comprising a cellular structure with an average size of each cell in a range between 5 and 200 microns and the number of cells per unit of volume in a range between 1.9 x 10⁵ and 1.4 x 10⁹ cells/cm³. To form said tube, a forming device which is inserted into an unvulcanized tube is used. Said unvulcanized tube is obtained in a prior initial stage of extrusion. At least one foaming agent is added to the elastomer material of the foamed layer (1') in said initial stage of extrusion, such that in a stage of vulcanizing and foaming, the tube is vulcanized and the foamed layer is also simultaneously foamed. The vulcanizing process is carried out under pressure. Finally, in a stage of removal, the already vulcanized and foamed tube is removed from the forming device.

## Description

### TECHNICAL FIELD

The present invention relates to foamed vulcanized tubes and to methods for forming said tubes.

### PRIOR ART

Elastomer-based tubes are often used in the automotive industry. To manufacture a tube of this type, a raw, i.e., unvulcanized tube must first be manufactured, and then subjected to a vulcanizing process so that the tube obtains the desired properties.

To make these tubes lighter, i.e., to reduce the weight of the tubes, and provide same with other properties not found in tubes formed only by solid layers, such as for example, thermal insulation, among others, it is also known that said tubes may incorporate a foamed layer generally arranged in the outer layer of the tube.

In this sense, JP2005188577A discloses a vulcanized and foamed tube comprising an unfoamed inner layer of rubber, a foamed outer layer of rubber, and a layer of textile reinforcement arranged between both inner and outer layers. Before the vulcanizing stage, the tube is obtained by means of an extrusion process in which the inner layer is extruded on an elastic mandrel, the textile reinforcement is then arranged, and the outer layer including the foaming agent is finally extruded on the textile reinforcement. Finally, the entire assembly is subjected to the vulcanizing process under atmospheric conditions.

### DISCLOSURE OF THE INVENTION

The object of the invention is to provide a vulcanized and foamed tube, as defined in the claims.

The vulcanized tube of the invention comprises at least one foamed layer of elastomer material. Said foamed layer comprises a cellular structure, wherein the average size of each cell is in a range between 5 and 200 microns and the number of cells per unit of volume (hereinafter cell density) is in a range between 1.9 x 10⁵ and 1.4 x 10⁹ cells/cm³.

In the method for forming the vulcanized tube of the invention, an inner forming device which is inserted into an unvulcanized tube is used. Said unvulcanized tube is obtained in a prior initial stage of extrusion, preferably without using a mandrel on which the inner layer of the tube is extruded. At least one foaming agent is added to the elastomer material of the foamed layer in said initial stage of extrusion, such that in a stage of vulcanizing and foaming the tube is vulcanized and the foamed layer is also simultaneously foamed. Before the vulcanizing and foaming process, the unvulcanized tube is introduced in the forming device comprising the desired final shape of the tube. The vulcanizing process, as well as the foaming process, in which cells are generated and expanded, are carried out under pressure, i.e., in an autoclave. After the stage of vulcanizing and foaming, the already vulcanized and foamed tube is removed from the forming device in a final stage of removal. Therefore, with the method of the invention it is possible to obtain in a single step the vulcanized tube of the invention, i.e., the final shape of the tube, the vulcanizing and the foaming of the foamed layer are carried out simultaneously in the autoclave such that the time for manufacturing the tube of the invention is significantly reduced, where it can be less than 15 minutes.

As a result of the foamed layer of the vulcanized tube, a lightweight tube is obtained, besides, as a result of the cells obtained in said foamed layer being micrometric, i.e., less than 200 microns, and of the cell density per unit of volume being high, the mechanical properties of the tube increase, i.e., the mechanical properties of the tube are better than those of a multilayer tube foamed in a conventional manner.

These and other advantages and features of the invention will become evident in view of the drawings and detailed description of the invention.

### DESCRIPTION OF THE DRAWINGS

Figure 1 shows a perspective view of the vulcanized tube according to an embodiment of the invention.
Figure 2 shows a schematic cut-away view of the cross-section of the vulcanized tube of Figure 1.
Figure 3A shows a microscopic photograph with 15x magnification of a portion of the cross-section of the vulcanized tube of Figure 1.
Figure 3B shows an enlarged microscopic photograph with 75x magnification of portion A of Figure 3A.
Figure 4 shows a perspective view of the unvulcanized tube and the forming device used in an embodiment of the method of the invention.
Figure 5 shows a perspective view of the unvulcanized tube, arranged on the forming device of Figure 4, in which a stop has been placed on each side of the unvulcanized tube.
Figure 6 shows a graph comparing the increase in relative compressive/bending stress and the relative density of the foamed layer of several vulcanized tubes according to the invention and a vulcanized tube with conventional foaming.
Figure 7 shows a graph depicting the increase in thermal resistance as a function of the relative density of the foamed layer 1' according to two different embodiments of the tube of the invention.

### DETAILED DISCLOSURE OF THE INVENTION

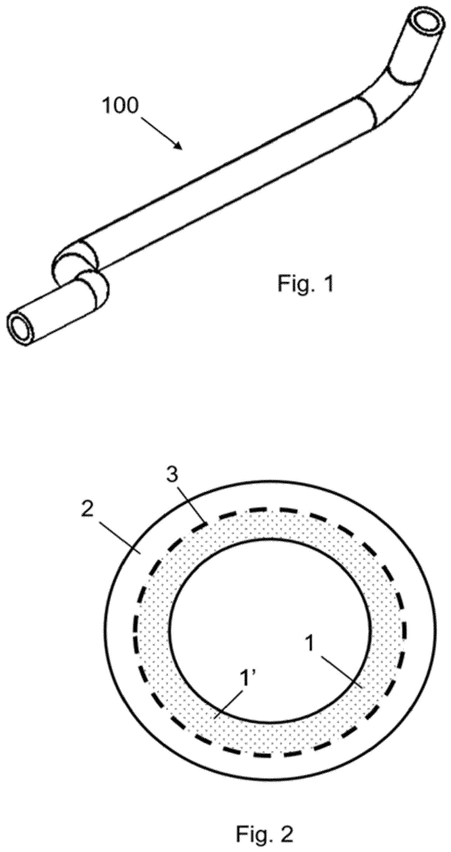

Figure 1 shows a non-limiting example of the vulcanized tube 100 according to the invention. As can be seen in said drawing, the final shape of the tube 100 comprises curved segments, segments which are formed in a stage of vulcanizing and foaming of the manufacturing method of the invention, as will be described in detail below.

The vulcanized tube 100 of the invention comprises at least one foamed layer 1' of elastomer material. Said foamed layer 1' comprises a cellular structure wherein the average size of each cell is in a range between 5 and 200 microns, preferably between 50 and 100 microns, and the number of cells per unit of volume (hereinafter, cell density) is in a range between 1.9 x 10⁵ and 1.4 x 10⁹ cells/cm³, preferably between 7 x 10⁵ and 2.8 x 10⁶ cells/cm³. This structure will be referred to hereinafter as a microcellular structure.

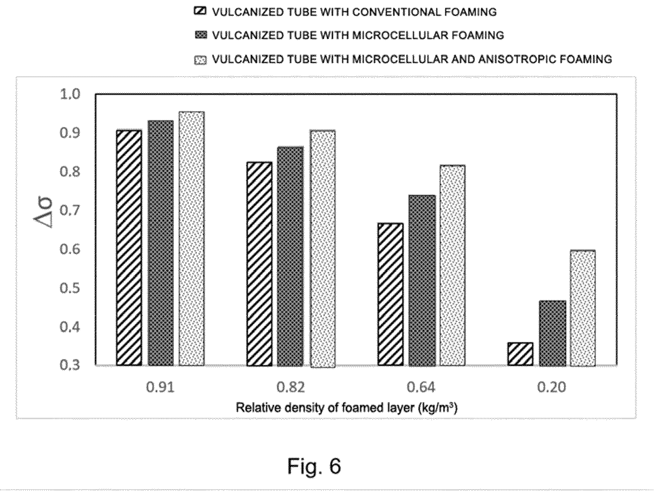

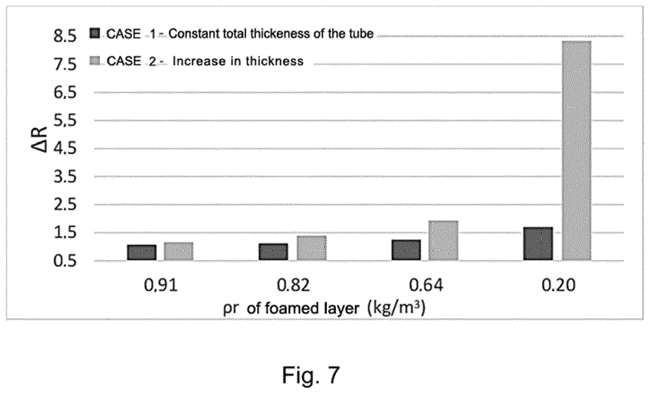

As a result of the foamed layer 1' of the vulcanized tube 100, a lightweight tube 100 is obtained, besides, as a result of the cells obtained in said foamed layer 1' being micrometric, i.e., less than 200 microns, and having a considerable cell density, the mechanical properties of the tube increase in comparison with a conventional vulcanized and foamed tube (with a cellular structure greater than 200 microns and preferably with interconnected isotropic cells), as can be seen in Figure 6. Likewise, the thermal insulation capacity, i.e., the thermal resistance, of the vulcanized tube 100 of the invention also increases due to the cellular structure of the invention, as can be seen in Figure 7. Said drawing depicts the increase in thermal resistance (ΔR) of the tube 100 as a function of the relative density of the foamed layer 1' according to two cases: in the first case, the premise is to maintain the final thickness of the vulcanized tube 100 after foaming, this thickness being similar to the thickness of an unfoamed tube, and in the second case, starting from the same thickness, the final thickness of the vulcanized tube 100 increases after the foaming process as a result of the radial expansion which the foamed layer experiences. In both cases, as can be seen in Figure 7, the thermal insulation or resistance increases as the density of the tube 100 decreases. In the context of the invention, thermal resistance is the coefficient between the thickness of the tube and thermal conductivity; therefore, as expected, the increase in thermal insulation or resistance is more accentuated in the case in which in addition to reducing the density of the tube 100, the final thickness of the tube 100 is also increased (in comparison with an unfoamed tube).

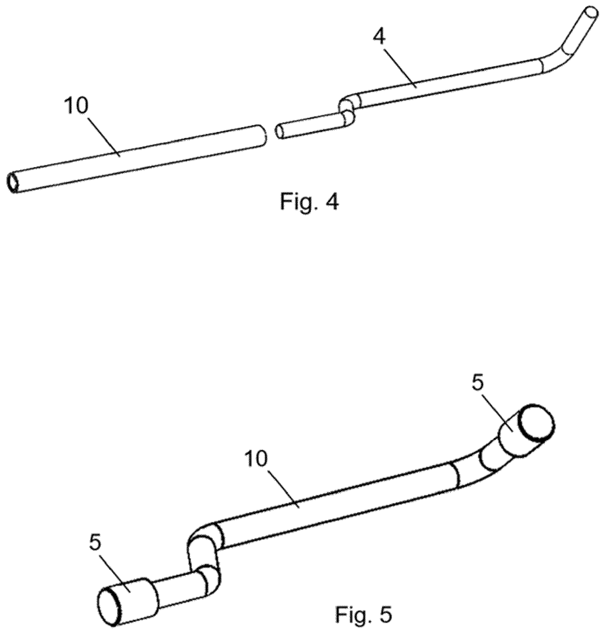

In the method for manufacturing the vulcanized tube 100 of the invention an inner forming device 4 is used, like the one shown, for example, in Figure 4, which is inserted into an unvulcanized tube 10. Said unvulcanized tube 10 is obtained in a prior initial stage of extrusion, preferably without using a mandrel on which the first layer or inner layer of the tube 10 is extruded. At least one foaming agent is added to the elastomer material of the foamed layer 1' in said initial stage of extrusion, such that under the extrusion conditions required for producing the extruded unvulcanized tube (temperature, residence time, shear, etc.), a prior decomposition of the foaming agent, that is at least significant, does not occur. In a stage of vulcanizing and foaming, the tube 10 is vulcanized and the foamed layer 1' is also simultaneously foamed, i.e., in said stage, the decomposition reaction of the foaming agent occurs at the same time as the decomposition reaction of the vulcanizing agent, with the cellular structure of the invention being formed. Before the stage of vulcanizing and foaming, the unvulcanized tube 10 is introduced in the forming device 4 which, as can be seen in Figure 4, comprises the desired final shape of the vulcanized tube 100. The vulcanizing process is carried out under pressure, i.e., in an autoclave, so the selected foaming agent and the vulcanizing agent must be such that they allow the gaseous phase generated in the form of cells to expand under the action of this external pressure. In other words, the pressure generated inside the cells must be greater than the external pressure generated on the tube in the autoclave. It can also happen that part of this expansion occurs while external pressure is applied in the autoclave and another part after this external pressure is removed from the autoclave. In other words, the expansion of the foamed layer 1' can possibly occur in two phases, but always in the stage of vulcanizing and foaming: a first phase under the external pressure exerted in the autoclave and a second phase after removing this pressure. After the stage of vulcanizing and foaming, the already vulcanized and foamed tube 100 with the desired final shape is removed from the forming device 4 in a final stage of removal. Therefore, with the method of the invention it is possible to obtain in a single step the vulcanized tube 100 of the invention, i.e., the final shape of the tube 100, the vulcanizing and the foaming of the foamed layer 1' are carried out simultaneously in the autoclave such that the time for manufacturing the tube 100 of the invention is significantly reduced, where it can be less than 15 minutes.

There are processes in which in the initial stage of extrusion the unvulcanized tube is obtained using a mandrel, i.e., covering said mandrel with the first layer of the tube by extrusion. However, by means of this method the obtained tubes are straight tubes, so this method is not optimal if a vulcanized tube 100 with curved segments is to be obtained.

Vulcanization is a process whereby raw (unvulcanized) elastomer material is heated in the presence of a vulcanizing agent, preferably a peroxide, in order to make it harder and more cold-resistant, providing the tube with the necessary features. Vulcanization is generally an irreversible process.

Reducing the density of a tube by means of foaming processes normally involves reducing the mechanical properties of said tube, for example, the compressive or bending stress (σ), typically reduced in a quadratic manner with the reduction in density. However, vulcanizing in an autoclave according to the method of the invention allows the foamed layer 1' of the vulcanized tube 100 of the invention to comprise a micrometric cellular structure, i.e., less than 200 microns, and with a density such that they partially compensate for the loss of mechanical properties due to the reduction in density of the vulcanized tube 100 (mechanical properties decrease when density is reduced but not in a potential quadratic relationship but rather in a potential relationship with an exponent less than 2). The relative density of the foamed layer 1' of the vulcanized tube 100 according to the embodiment of the invention is in a range between 0.20 and 0.99, preferably between 0.64 and 0.82.

In the scope of the invention, the relative density (ρᵣ) of the foamed layer 1' is defined as the coefficient between the absolute density of the foamed layer (ρₑ measured in kg/m³) and the absolute density of the starting solid (ρₛ also measured in kg/m³), with absolute density being understood as the weight (W) of the foamed or unfoamed (in the case of the starting solid) material or sample to be analyzed divided by its volume (V). The density of the foamed samples (ρₑ) is measured as described in ASTM D1622/D1622M-14. In this method, the samples of the foamed layer 1' are cut with a defined geometry and their dimensions and weight are obtained using a gage with a precision of 0.01 mm and a balance with a precision of 0.01 mg. Density is obtained as the ratio between the mass and volume of each sample. Density is determined in three different square samples for each foamed layer 1', with a length of 20 mm and a height of 2-3 mm.

Autoclaves work by allowing the entry or generation of water vapor, but restricting its exit, until obtaining an internal pressure above atmospheric pressure, which causes the vapor to reach the required temperature for the vulcanization process to take place.

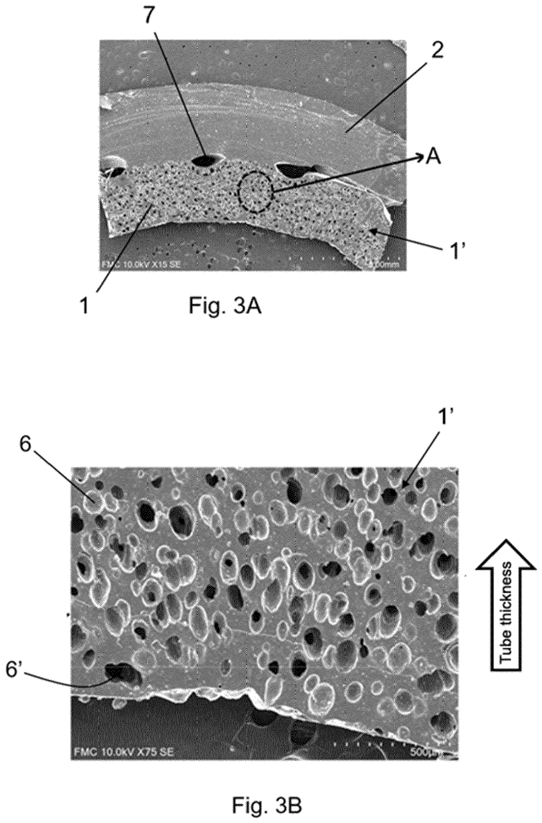

By vulcanizing in an autoclave, the vulcanized tube 100 which is obtained comprises a more homogeneous structure, as can be observed in Figure 3A (figure with 15x magnification), and it is also possible to orient the cellular structure of the foamed layer 1' of the tube 100 in the direction of the thickness of the tube 100, as can be observed in Figure 3B (Figure with 75x magnification). An anisotropic cellular structure in the radial direction of the tube 100, i.e., in the direction of the thickness of the tube 100, which allows even further increasing the mechanical properties of the vulcanized tube 100, as shown in the example of the graph of Figure 6, can therefore be obtained in the foamed layer 1'. According to an embodiment of the invention, the anisotropy ratio is in a range between 1 and 2, preferably between 1.1 and 1.5.

In the method of the invention, the foaming agent used is a chemical foaming agent wherein the decomposition reaction partially or completely overlaps the decomposition reaction of the vulcanizing agent (previously inserted, for example in the initial stage of extrusion, into the unvulcanized tube 10), i.e., the decomposition reaction of the foaming agent is carried out partially or completely in the same range of temperatures in which the vulcanizing process of the elastomer material is carried out.

In a non-limiting example, the foaming agent can be 4,4'-oxydibenzenesulfonyl hydrazide (OBSH), sodium bicarbonate, mixtures with citric acid, activated azodicarbonamides, and/or any combination thereof.

In the preferred method of the invention, the average foaming agent particle size is in a range between 1 and 20 microns, preferably between 5 and 10 microns, and the concentration of said foaming agent is in a range between 1.5 and 20 phr (parts per hundred of elastomer), preferably between 3 and 10 phr, which allows obtaining the microcellular structure of the foamed layer 1' of the vulcanized tube 100 of the invention.

Additionally, the range of decomposition temperatures of the foaming agent according to an embodiment of the invention is in a range between 130°C and 200°C, preferably between 140°C and 160°C.

As a result of the foaming agent used and of the method of the invention, the cells 6 and 6' of the cellular structure of the foamed layer 1' of the vulcanized tube 100 are mainly closed, i.e., at least between 80% and 90% of the cells 6 and 6' are closed (the remaining cells being open), giving rise to a closed-cell cellular structure with cells that are preferably not interconnected with one another. This configuration allows the mechanical properties and the thermal insulation capacity of the foamed layer 1', and therefore of the tube 100, to increase even more with respect to a conventional foamed tube with cells above 200 microns and with interconnected cells. In the case of the vulcanized tube 100 of the invention, the thermal insulation capacity may increase between 1.1- and 1.8-fold.

In the scope of the invention, to determine the term "closed cell" of the foamed layer 1', it is first necessary to define the meaning of the term "open cell", which refers to the fact that the foamed layer 1' has an open cell content equal to or less than 20%, preferably equal to or less than 15%, more preferably equal to or less than 10%, and even more preferably equal to or less than 5%. In an even more preferred embodiment, it is 0%. These values allow considering the foamed layer 1' as a closed-cell cellular material. The open cell content defines the degree of interconnection between the cells of the foamed layer 1'. In the present invention, the "open cell" content was determined by means of gas pycnometry following the method of standard ASTM D 2856-94 (1998). According to this standard, a material with a 100% open cell has all the cells thereof connected with the outside of the material through holes in the cell walls and/or in the absence of said walls, and on the contrary, a material with 0% open cell does not have cells interconnected with one another and with the outside of the sample. The foamed layer 1' of the present invention comprises an "open cell" content of less than 20%, and therefore the cellular structure of the foamed layer 1' of the vulcanized tube 100 is considered a closed-cell cellular structure.

Therefore, the vulcanized tube 100 of the invention besides comprising a microcellular structure may also comprise an anisotropic structure in the radial direction of the tube 100 and a closed-cell cellular structure, as can be seen in Figure 3B. In said drawing, the cells 6 and 6' (in the shape of ellipses) are depicted in two gray tones depending on the depth of each cell when taking the photograph. Therefore, cells 6 in a light gray tone represent cells closer to the surface of analysis, whereas cells 6' in a dark gray tone represent cells that are farther away.

In the scope of the invention, the term anisotropy is understood as the elements to which it refers, i.e., the cells of the cellular structure of the foamed layer 1', comprising an elongated or oval shape, as can be seen in Figure 3B, wherein one dimension is greater than others, preferably the dimension referring to the radial direction or of the thickness of the tube 100 of the invention. In general, anisotropic cells of the invention comprise a non-uniform, non-homogenous, and non-spherical (generally ellipsoidal) shape.

The method used for determining the size of the cells of the foamed layer 1' of the invention and the anisotropy ratio (R) is described below. First, three samples of the foamed layer 1' are cut into squares measuring 5 x 2-3 mm in size. Each sample is vacuum coated with a gold monolayer, with the cell morphology being observed by means of scanning electron microscopy (SEM) with a JEOL JSM-820 microscope. Each sample is examined by means of SEM by taking at least three SEM micrographs in random locations. An image analysis technique, as described in *"*Caracterización de la estructura celularbasada en procedimientos de análisis de imagines interactivos para el usuario" [Pinto J, Solorzano E, Rodriguez-Perez MA, and de Saja JA. Journal of Cellular Plastics 2013; 49 (6): 555-575.], incorporated herein by reference, is used for each of the SEM micrographs to determine the main characteristics of the cellular structure of the foam, i.e., the average size of the cells (Φ), and the mean anisotropy ratio or anisotropy ratio (R).

To determine the anisotropy ratio (R), the ratio between the diameter of the cell in direction Y of the image (coinciding with the radial direction or thickness of the tube) and the diameter of the cell in direction X of the image (direction perpendicular to the radial direction or thickness of the tube) is measured for each individual cell.

The sample size for obtaining average values representative of both the cell size and the anisotropy ratio (R) is at least 100 cells.

Figure 6 depicts the increase in "relative σ" (compressive/bending stress) corresponding to the stress measured in a bilayer vulcanized and foamed tube 100 as a function of the relative density thereof, wherein the thickness ratio is 0.5/0.5; i.e., the same contribution in the thickness of each layer. As can be seen in said drawing, the loss of mechanical properties of a conventional vulcanized and foamed tube is more pronounced than in the case of a vulcanized and foamed tube but with a microcellular structure and/or an anisotropic structure. In fact, for one and the same density of the tube, the mechanical properties of a foamed tube with the cellular structure of the invention are better, and even better if said structure furthermore comprises an anisotropic orientation in the direction of thickness of the tube 100.

Optionally, the vulcanized tube 100 of the invention may comprise more than one layer, one of said layers being the foamed layer 1'. In an embodiment of the invention, the vulcanized tube 100 comprises two layers, an inner layer 1 and an outer layer 2. In this embodiment, the inner layer 1 is the foamed layer 1' and the outer layer 2 is an unfoamed layer of elastomer. However, arranging the foamed layer 1' in the outer layer 2 does not alter the essence of the invention.

The elastomer material of any of the layers of the vulcanized tube 100 of the invention can be rubber, natural rubber, EAM (ethylene acrylic elastomer), VMQ (vinyl-methyl-silicone), ACM (acrylic elastomer), FKM (fluorocarbon elastomers), CR (chloroprene rubber), EPDM (ethylene diene rubber), and/or any combination thereof.

The vulcanized tube 100 of the invention may also comprise intermediate layers 3 arranged between the inner layer 1 and the outer layer 2. At least one of said inner layers 3 can be a layer of textile reinforcement, said textile reinforcement preferably being PPS (polyphenylene sulfide), PA (polyamide), PP (polypropylene), aramide, meta-aramide, POD (polyoxadiazole), PET (polyethylene terephthalate), and/or any combination thereof. Figure 2 shows an example of a vulcanized tube 100 with the inner layer 1 as the foamed layer 1', an unfoamed outer layer 2 of elastomer material, and a reinforcement layer 3.

Optionally, the vulcanized tube 100 may also comprise more intermediate unfoamed or foamed layers 3 of elastomer material, said layers 3 comprising different properties and/or materials.

Likewise, between two unfoamed and/or foamed layers of elastomer and/or between an unfoamed and another foamed layer of elastomer, a layer of textile reinforcement can be arranged. In Figure 3A, gaps 7 (depicted in the form of globules) arranged between the outer layer 2 and the foamed inner layer 1' represent gaps defined by the textile reinforcement, which has been eliminated from the sample of the tube 100 in order to take the photograph.

As mentioned above, in the stage of vulcanizing and foaming of the method of the invention, foaming of the foamed layer 1' occurs simultaneously with the vulcanizing process of the elastomer material. In said stage, the volume of the foamed layer 1' increases. To prevent the expansion of said foamed layer 1' in the longitudinal direction of the tube 100 and to thereby assure the expansion of the foamed layer 1' in the radial direction of the tube 100 such that the anisotropic cellular structure in the radial direction of the tube 100 is facilitated, a stop 5 is placed at each end of the unvulcanized tube 10, as shown in Figure 5, before the stage of vulcanizing and foaming. Each stop 5 can cooperate with a corresponding end of the forming device 4 to fix the position thereof. The diameter of each stop 5, at least in a portion close to the end suitable for cooperating with the corresponding end of the tube 10, is greater than the diameter of the final vulcanized tube 100.

Therefore, the assembly formed by the forming device 4, the unvulcanized tube 10, and the stops 5 arranged at the end of said assembly is introduced in the autoclave machine at a given pressure, preferably between 6 and 9 bars, at a temperature comprised in a range between 160°C and 220°C, preferably between 170°C and 190°C, and for a given time (less than 15 minutes) so that the elastomer material is vulcanized and the foamed layer 1' is foamed. Therefore, the stage of vulcanizing and foaming of the method of the invention is very short compared with other stages of vulcanizing and foaming of tubes with conventional foaming.

As a result of the tube 10 being vulcanized and expanded in the stage of vulcanizing and foaming in an autoclave under a certain external pressure greater than the atmospheric pressure and of the expansion preferably occurring in the radial direction of the tube 100, foamed tubes 100 with complex shapes can be generated.

## Claims

1. Vulcanized tube comprising at least one foamed layer (1') of elastomer material, **characterized in that** said foamed layer (1') comprises a cellular structure wherein the average size of each cell is in a range between 5 and 200 microns, and the number of cells per unit of volume is in a range between 1.9 x 10⁵ and 1.4 x 10⁹ cells/cm³.

2. Tube according to claim 1, wherein the average size of each cell of the cellular structure of the foamed layer (1) is in a range between 50 and 100 microns, and the number of cells per unit of volume of the cellular structure of the foamed layer (1) is in a range between 7 x 10⁵ and 2.8 x 10⁶cells/cm³.

3. Tube according to claim 1 or 2, wherein the cellular structure of the foamed layer (1') is anisotropic in the radial direction of the tube (100).

4. Tube according to claim 3, wherein the anisotropy ratio is in a ratio between 1 and 2, preferably between 1.1 and 1.5.

5. Tube according to any of the preceding claims, wherein the cellular structure of the foamed layer (1') is a closed cellular structure with cells (6, 6') preferably not interconnected with one another.

6. Tube according to any of the preceding claims, comprising an inner layer (1) and an outer layer (2), one of said layers (1, 2) being the foamed layer (1') of elastomer material and the other an unfoamed layer of elastomer.

7. Tube according to claim 6, wherein the inner layer (1) is the foamed layer (1').

8. Tube according to claim 6 or 7, wherein at least one intermediate layer (3) is arranged between said inner layer (1) and outer layer (2), wherein at least one of said intermediate layers (3) is a layer of textile reinforcement, said textile reinforcement preferably being PPS (polyphenylene sulfide), PA (polyamide), PP (polypropylene), aramide, meta-aramide, POD (polyoxadiazole), PET (polyethylene terephthalate), and/or any combination thereof.

9. Tube according to any of the preceding claims, wherein the elastomer material is rubber, being able to be natural rubber, EAM (ethylene acrylic elastomer), VMQ (vinyl-methyl-silicone), ACM (acrylic elastomer), FKM (fluorocarbon elastomers), CR (chloroprene rubber), EPDM (ethylene diene rubber), and/or any combination thereof.

10. Tube according to any of the preceding claims, wherein the relative density of the foamed layer (1') of the tube (100) is in a range between 0.20 and 0.99 kg/m³, preferably between 0.64 and 0.82.

11. Method for manufacturing a vulcanized tube (100) of elastomer according to any of the preceding claims, comprising an initial stage of extrusion in which at least one foaming agent is added to the elastomer material of the foamed layer (1'), **characterized in that** the unvulcanized tube (10) is obtained in the initial stage of extrusion without using an inner mandrel, and furthermore comprises the following stages:
- a stage of introducing the unvulcanized tube (10) in a forming device (4) comprising the desired final shape of the tube (100),
- a stage of vulcanizing and foaming in which the foamed layer (1') is vulcanized and simultaneously foamed, wherein vulcanization and at least part of the foaming are carried out under pressure, and
- a stage of removal in which the forming device (4) is removed from the already vulcanized and foamed tube (100).

12. Method according to claim 11, wherein, before the stage of vulcanizing and foaming, a stop (5) is placed on each side of the unvulcanized tube (10) to prevent the longitudinal expansion of the tube (100) during the stage of vulcanizing and foaming.

13. Method according to claim 11 or 12, wherein the average foaming agent particle size is in a range between 1 and 20 microns, preferably between 5 and 10 microns.

14. Method according to any of claims 11 to 13, wherein the foaming agent concentration is in a range between 1.5 and 20 phr (parts per hundred of elastomer), preferably between 3 and 10 phr.

15. Method according to any of claims 11 to 14, wherein the foaming agent is a chemical foaming agent, wherein the decomposition reaction is carried out partially or simultaneously with the decomposition reaction of a vulcanizing agent previously inserted into the unvulcanized tube (10), preferably being 4,4'-oxydibenzenesulfonyl hydrazide (OBSH), sodium bicarbonate, mixtures with citric acid, activated azodicarbonamides, and/or a combination thereof.
